(19) Europäisches Patentamt
European Patent Office
Office européen des brevets

(11) Veröffentlichungsnummer: **0 028 401**
**B1**

(12) # EUROPÄISCHE PATENTSCHRIFT

(45) Veröffentlichungstag der Patentschrift: **11.08.82**

(21) Anmeldenummer: **80106669.7**

(22) Anmeldetag: **30.10.80**

(51) Int. Cl.³: **C 09 D 5/40**, C 08 G 18/06, C 09 D 3/72, C 25 D 13/06

(54) **Verfahren zur Herstellung von wasserverdünnbaren, Oxazolidingruppen tragenden Bindemitteln.**

(30) Priorität: **05.11.79 AT 7081/79**

(43) Veröffentlichungstag der Anmeldung: **13.05.81 (Patentblatt 81/19)**

(45) Bekanntmachung des Hinweises auf die Patenterteilung: **11.08.82 Patentblatt 82/32**

(84) Benannte Vertragsstaaten: **DE FR GB IT SE**

(56) Entgegenhaltungen: **FR A 2 373 594**

(73) Patentinhaber: **VIANOVA KUNSTHARZ AKTIENGESELLSCHAFT**
**Postfach 191 Leechgasse 21**
**A-8011 Graz (AT)**

(72) Erfinder: **Leitner, Wolfgang, Dr.**
**Niesenbergergasse 77**
**A-8020 Graz (AT)**
Erfinder: **Pampouchidis, Georg, Dr.**
**Obere Teichstrasse 31**
**A-8010 Graz (AT)**
Erfinder: **Bleikolm, Anton, Dr.**
**Obere Teichstrasse 38c**
**A-8010 Graz (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

# Verfahren zur Herstellung von wasserverdünnbaren, Oxazolidingruppen tragenden Bindemitteln

Die Erfindung betrifft ein Verfahren zur Herstellung von wasserverdünnbaren, Oxazolidingruppen tragenden Bindemitteln, welche insbesondere zur Formulierung kathodisch abscheidbarer Überzugsmittel geeignet sind.

Aus den AT-A 342 169, 348 635, 343 770, 343 771, 346 989 ist es bekannt, die für die kathodische Abscheidung notwendigen basischen Gruppen durch Zwischenprodukte, welche eine freie Isocyanatgruppe und mindestens eine basische Stickstoffgruppierung tragen, in Hydroxylgruppen tragende Polymermoleküle einzuführen. Solche Monoisocyanatverbindungen werden gemäß diesem Stand der Technik durch Umsetzung von Di- oder Polyisocyanaten mit der entsprechenden Menge an Dialkylalkanolaminen hergestellt.

Beim Einbrennen der elektrophoretisch abgeschiedenen Filme werden die genannten Amine zum Teil abgespalten und stellen einen beträchtlichen Teil der Einbrennverluste dar, welche aus der Abluft der Einbrennanlagen entfernt werden müssen.

Das gleiche Problem tritt auch bei den Produkten auf, wie sie z.B. in der DE-A 20 57 799 oder den DE-A 22 52 536 und 22 65 195 beschrieben werden, in denen kathodisch abgeschiedene Überzugsmittel nach Abspaltung der Blockierungsmittel aus blockierten Isocyanaten unter Urethanbildung vernetzt werden.

Aufgabe der vorliegenden Erfindung war es, Bindemittel insbesondere für die kathodische Elektrotauchlackierung zur Verfügung zu stellen, welche in ihren Beständigkeitseigenschaften den Anforderungen der Verbraucher, insbesondere der Autoindustrie, entsprechen, andererseits verringerte Einbrennverluste aufweisen.

Es wurde nun gefunden, daß diese Forderungen durch den Einsatz von Monoaddukten von N-Hydroxyalkyloxazolidinen an organischen Diisocyanaten zur Einführung der basischen Funktionen in ein Hydroxylgruppen tragendes Polymermolekül erfüllt werden kann.

Die vorliegende Erfindung betrifft daher ein Verfahren zur Herstellung von nach vollständiger oder teilweiser Neutralisation mit anorganischen und/oder organischen Säuren wasserverdünnbaren Bindemitteln, welche insbesonders in kathodisch abscheidbaren Überzugsmitteln eingesetzt werden können, auf der Basis von harzartigen, Urethanbindungen sowie Aminogruppen enthaltenden Polykondensations-, Polymerisations- oder Polyadditionsverbindungen, welches dadurch gekennzeichnet ist, daß man zur Herstellung dieser Verbindungen.

(A) 1 Mol eines Dialkanolamins mit 0,8 bis 1,3, vorzugsweise 1,0 bis 1,2 Mol eines Aldehyds oder eines Ketons mit bis zu 6 C-Atomen pro Alkylrest in bekannter Weise bei Temperaturen bis maximal 130 °C zu einem N-Hydroxyalkyloxazolidin umsetzt,

(B) das N-Hydroxyalkyloxazolidin mit 1 Mol eines aromatischen und/oder cycloaliphatischen und/oder aliphatischen Diisocyanats bei maximal 30 °C bis zu einem dem Monoaddukt entsprechenden NCO-Wert reagiert und

(C) das Monoaddukt bei 20-120 °C über seine freie Isocyanatgruppe mit den Hydroxylgruppen eines Polykondensations-, Polymerisations- oder Polyadditionsharzes verknüpft, wobei die Komponente (B) in einer Menge eingesetzt wird, daß das Endprodukt eine Aminzahl zwischen 30 und 100 mg KOH/g aufweist.

Überraschenderweise zeigen diese Produkte beim Einbrennen eine wesentlich verringerte Menge an Spaltprodukten. Überdies erfolgt die Ausbildung eines widerstandsfähigen Films bereits bei Einbrenntemperaturen ab 130 °C, wodurch gegenüber den Produkten des Standes der Technik eine Herabsetzung der Einbrenntemperatur und/oder der Einbrennzeit möglich ist.

Es ist anzunehmen, daß dieser überraschende Effekt dadurch erreicht wird, daß der Oxazolidinring unter der Einwirkung von Wasser im sauren Medium gespalten wird, wobei folgender Reaktionsablauf angenommen werden kann :

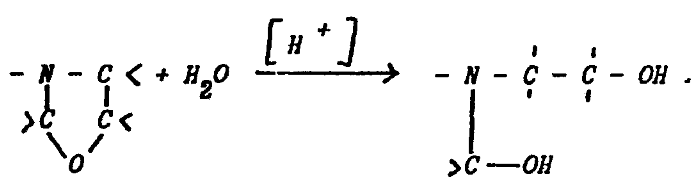


Aufgrund der Ergebnisse mit den erfindungsgemäßen Produkten scheint die Annahme gerechtfertigt, daß die vorteilhaften Eigenschaften zu einem wesentlichen Teil auf die Reaktivität der gegebenenfalls substituierten N-Methylolgruppen zurückzuführen ist.

Die Herstellung der N-Hydroxyalkyloxazolidine erfolgt in bekannter Weise durch Umsetzung von Dialkanolaminen und Aldehyden oder Ketonen bei Temperaturen bis max. 130 °C unter Abspaltung von Wasser.

Als Dialkanolamine werden dabei vor allem Diäthanolamin und Diisopropanolamin eingesetzt. Gegebenenfalls können auch Dialkanolamine mit längeren Alkylresten verwendet werden. Als Carbonylkomponente wird vorzugsweise Formaldehyd eingesetzt, doch können auch höhere Aldehyde oder Ketone mit bis zu 6 C-Atomen pro vorhandenem Alkylrest verwendet werden.

Für die Herstellung des Monoadduktes aus dem N-Hydroxyalkyloxazolidin und dem Diisocyanat ist es wesentlich, daß im Reaktionsprodukt keine oder nur minimale Mengen an nichtreagiertem Dialkanolamin vorhanden sind. Die Beseitigung solcher gegebenenfalls vorhandener Aminreste kann in einfacher Weise dadurch erfolgen, daß man das Oxazolidin entsprechend der Menge an freiem Amin mit 0,1-0,3 Mol eines Alkylacrylats, wie Äthylacrylat oder eines Propyl- oder Butylacrylates oder Äthylhexylacrylat bei 40-100 °C während 1/2 bis 5 Stunden reagiert.

Als Diisocyanate können die bekannten und handelsüblichen aromatischen, cycloaliphatischen und aliphatischen Verbindungen dieser Gruppen eingesetzt werden, vorzugsweise werden Toluylendiisocyanat, Isophorondiisocyanat, Hexamethylen-1,6-diisocyanat u. a. verwendet.

Das so erhaltene N-Hydroxyalkyloxazolidin, das im wesentlichen frei von Aminowasserstoffatomen ist, wird anschließend mit Diisocyanaten in einem Mengenverhältnis umgesetzt, bei welchem nur die Hälfte der vorhandenen Isocyanatgruppen mit den Hydroxylgruppen des N-Hydroxyalkyloxazolidins reagiert. Die Temperatur darf während der Umsetzung 30 °C nicht übersteigen. Es ist vorteilhaft, das N-Hydroxyalkyloxazolidin langsam dem Diisocyanat zuzusetzen, da dadurch einerseits eine zu starke Wärmeentwicklung und andererseits eine zu hohe Konzentration von freiem Omazolidin vermieden wird. Weiterhin ist es vorteilhaft, das Gemisch von Diisocyanat und Hydroxyalkyloxazolidin mit einem isocyanatinerten Lösungsmittel zu verdünnen. Zu diesem Zweck können Ester, Ketone, Aromaten etc. oder Mischungen dieser Lösungsmittel verwendet werden. Die Zugabezeit soll 1 Stunde, vorzugsweise 30 Minuten nicht überschreiten. Außerdem soll das Addukt nach Beendigung der Zugabe sofort weiter umgesetzt werden.

Eine besondere Ausführungsform, welche eine einfachere und sicherere Reaktionsführung gestattet und wodurch auch die Stabilität dieses Zwischenproduktes erhöht wird, besteht im Ersatz eines Teils des Oxazolidins durch ein Hydroxyalkyl(meth)acrylat. Bei der Herstellung dieses « Mischadduktes » wird pro Mol Diisocyanat ein Anteil von 5-40 Mol-% des Oxazolidins durch ein Hydroxyalkyl(meth)acrylat ersetzt, welches anschließend oder gleichzeitig mit dem Oxazolidin dem Diisocyanat zugesetzt wird.

Durch diese Maßnahme werden zusätzlich thermisch durch Polymerisation vernetzbare Stellen in das Bindemittel eingeführt, wodurch eine höhere Vernetzungsdichte im eingebrannten Film erhalten wird.

Das N-Hydroxyalkyloxazolidin-Diisocyanat-Monoaddukt wird anschliessend mit dem hydroxyfunktionellen Polykondensations-, Polymerisations- oder Polyadditionsharz zu einem nach partieller oder vollständiger Neutralisation der basischen Gruppen wasserlöslichen Bindemittel umgesetzt, welches zur Erzielung einer ausreichenden Verdünnbarkeit eine Aminzahl zwischen 30 und 100 mg KOH/g aufweisen muß.

Zur Erzielung einer optimalen Vernetzungsdichte werden vorzugsweise Polykondensations-, Polymerisations- oder Polyadditionsharze eingesetzt, welche neben den Hydroxylfunktionen polymerisierbare Doppelbindungen aufweisen.

Die bevorzugten Ausgangsharze für die Umsetzung mit den Monoaddukten sind demgemäß z. B. Umsetzungsprodukte von Epoxidharzen mit ungesättigten Carbonsäuren, wie Epoxyacrylate, oder Umsetzungsprodukte von Carboxylgruppen tragenden Copolymerisaten mit Glycidyl(meth)acrylat oder ungesättigte Polyesterharze.

Die Umsetzung erfolgt bei Temperaturen von 20-120 °C, gegebenenfalls in Gegenwart isocyanatinerter Lösungsmittel, wobei die Reaktion auch ohne Zusatz von Katalysatoren in kurzer Zeit beendet ist. Der Reaktionsfortschritt wird durch Bestimmung des NCO-Wertes verfolgt, der nach beendeter Umsetzung unter 0,1 % liegen soll. Nach erfolgter Reaktion können selbstverständlich auch andere Lösungsmittel zum Anlösen der Bindemittel herangezogen werden.

Die Bindemittel können in bekannter Weise mit Pigmenten vermahlen werden und werden zur Herstellung eines verarbeitungsfertigen Badmaterials nach partieller oder vollständiger Neutralisation mit anorganischen oder organischen Säuren bei pH-Werten zwischen 4 und 6,5 mit vorzugsweise deionisiertem Wasser auf einen Festkörpergehalt zwischen 5 und 20 % verdünnt.

Die Bedingungen für die Beschichtung eines als Kathode geschalteten Substrats sind dem Fachmann bekannt und bedürfen keiner weiteren Erläuterung.

Die Filmbildung erfolgt bei Verwendung der erfindungsgemäßen Bindemittel bereits ab 140 °C, optimale Beständigkeitseigenschaften werden bei Einbrennbedingungen von 10-30 Minuten bei 160-180 °C erzielt.

Die nachfolgenden Beispiele sollen die Erfindung erläutern, stellen jedoch keine Beschränkung ihres Umfanges dar. Alle Angaben in Teilen oder Prozenten beziehen sich, soferne nicht anders angegeben, auf Gewichtseinheiten.

A) Herstellung der N-Hydroxyalkyloxazolidine

N-2-Hydroxyäthyloxazolidin (HETOX) :

105 g Diäthanolamin und 33 g Paraformaldehyd werden vermischt und nach Zugabe von Toluol als Kreislaufmittel langsam auf 120 °C erhitzt. Nach Beendigung der Wasserbildung wird das Kreislaufmittel

im Vakuum abgezogen.

N-2-Hydroxypropyl-5-methyl-oxazolidin (HIPOX) :

133 g Diisopropanolamin und 33 g Paraformaldehyd werden wie unter 1) umgesetzt.

Die so hergestellten N-Hydroxyalkyloxazolidine werden zur Beseitigung der eventuell verbliebenen Reste an freiem Amin mit den in Tabelle 1 angegebenen Mengen eines Acrylsäurealkylesters versetzt und 2 Stunden bei 70 °C behandelt.

TABELLE 1

| | HETOX | HIPOX | ETAC | BUAC | ETHEXAC |
|---|---|---|---|---|---|
| A 1 | 117 | — | 10 | — | — |
| A 2 | 117 | — | 20 | — | — |
| A 3 | 117 | — | — | 12,8 | — |
| A 4 | 117 | — | — | 25,6 | — |
| A 5 | 117 | — | — | 38,5 | — |
| A 6 | 117 | — | — | — | 36,9 |
| A 7 | — | 145 | 10 | — | — |
| A 8 | — | 145 | 30 | — | — |
| A 9 | — | 145 | — | 12,8 | — |
| A 10 | — | 145 | — | 38,5 | — |
| A 11 | — | 145 | — | — | 18,4 |

ETAC : Acrylsäureäthylester.
BUAC : Acrylsäurebutylester.
ETHEXAC : Acrylsäure-2-äthylhexylester.

B) Herstellung der Monoisocyanataddukte

In der Tabelle 2 sind die Mengenverhältnisse, die Arbeitsweise für die Herstellung der Monoisocyanataddukte sowie die Kennzahlen der Produkte angegeben.

TABELLE 2

| | Methode | TDI | IPDI | HMDI | Oxanolidin | HEMA | % Festkörper in AECLAC | NCO theoret. in % | NCO prakt. in % | MG |
|---|---|---|---|---|---|---|---|---|---|---|
| B 1 | 2 | 217,5 | — | — | 127 A 1 | 32,5 | 80 | 13,9 | 13,6 | 377 |
| B 2 | 1 | 174 | — | — | 155,5 A 5 | — | 60 | 12,8 | 12,5 | 329 |
| B 3 | 4 | 191,4 | — | — | 153,9 A 6 | 13,0 | 60 | 12,9 | 12,9 | 358 |
| B 4 | 3 | 174 | — | — | 175 A 8 | — | 60 | 12,0 | 12,1 | 349 |
| B 5 | 2 | 208,8 | — | — | 157,8 A 9 | 26,0 | 80 | 12,8 | 12,4 | 393 |
| B 6 | 4 | 200,1 | — | — | 163,4 A 11 | 19,5 | 60 | 12,6 | 12,5 | 383 |
| B 7 | 4 | — | 244,2 | — | 137 A 2 | 13,0 | 60 | 11,7 | 11,6 | 394 |
| B 8 | 4 | — | 244,2 | — | 142,6 A 4 | 13,0 | 80 | 11,6 | 11,6 | 400 |
| B 9 | 2 | — | 266,4 | — | 163,4 A 11 | 26,0 | 80 | 11,1 | 11,0 | 456 |
| B 10 | 1 | — | 222 | — | 175,0 A 8 | — | 80 | 10,6 | 10,3 | 397 |
| B 11 | 4 | — | — | 184,8 | 137,0 A 2 | 13,0 | 80 | 13,8 | 13,7 | 335 |
| B 12 | 4 | — | — | 201,6 | 229,8 A 3 | 26,0 | 80 | 11,0 | 11,1 | 457 |
| B 13 | 4 | — | — | 193,2 | 163,4 A 11 | 19,5 | 60 | 12,8 | 12,6 | 376 |
| B 14 | 4 | — | — | 168 | 183,5 A 10 | — | 60 | 12,0 | 11,8 | 352 |

TDI : handelsübliche Mischung von 2,4- und 2,6-Toluylendiisocyanat (80 : 20).
IPDI : Isophorondiisocyanat.
HMDI : Hexamethylen-1,6-diisocyanat.
HEMA : Methacrylsäurehydroxyäthylester.

Methode 1) : Diisocyanat und Monoäthylenglykolmonoglykolätheracetat (AEGLAC) werden vorgelegt, das Hydroxyalkyloxazolidin wird innerhalb von 30 Minuten bei guter Kühlung so zugetropft, daß die Temperatur nicht über 30 °C steigt.

Methode 2) : Diisocyanat und AEGLAC werden vorgelegt, das Hydroxyalkyloxazolidin wird innerhalb von 30 Minuten so zugetropft, daß die Temperatur nicht über 30 °C steigt. Danach erfolgt die Zugabe des Methacrylsäurehydroxyäthylesters.

Methode 3) : AEGLAC und die halbe Menge des insgesamt eingesetzten Diisocyanates werden vorgelegt, Hydroxyalkyloxazolidin und das restliche Diisocyanat werden gleichzeitig getrennt innerhalb von 30 Minuten zugetropft, so daß die Temperatur nicht über 30 °C steigt.

Methode 4) : Analog Methode 3). Danach wird der Methacrylsäurehydroxyäthylester zugegeben.

Bestimmung des NCO-Wertes :

Ca. 0,5-1 g Probe werden in einen Erlenmeyerkolben eingewogen, in Aceton gelöst und mit einigen Tropfen Bromphenolblau (acetonische Lösung) als Indikator versetzt. Die durch den Indikator blau gefärbte Lösung wird mit 0,5 n HCl (in Wasser) auf gelb zurücktitriert. Danach werden 10 ml Kappelmeier-Reagenz hinzugefügt und nach 1-2 Minuten mit 0,5 n HCl (in Wasser) das überschüssige Amin zurücktitriert (Farbumschlag : blau→gelb).

Berechnung :

$$\frac{B - V}{E \cdot FK} \cdot 0{,}5 \cdot 4{,}2 \cdot 100 = \%\ NCO$$

B = ml 0,5 n HCl Blindprobe
V = ml 0,5 n HCl Probe (nach der Zugabe von Kappelmeier-Reagenz)
E = Einwaage in g
FK = Festkörper

Kappelmeier-Reagenz :

64,4 g (0,5 Mol) Diisobutylamin werden in 940 ml Aceton gelöst.

C) Hydroxylgruppenhältige Ausgangsharze :

C1) 400 g eines Epoxidharzes mit einem Äquivalentgewicht von 185-195 auf Basis von Bisphenol A werden in 240 g AEGLAC gelöst und mit 158 g einer äquimolaren Mischung von Acryl- und Methacrylsäure bei 110 °C bis zu einer Säurezahl von unter 3 mg KOH/g umgesetzt.

C2) 200 g eines Epoxidharzes vom Bisphenol A Typ (Äquivalentgewicht 185-195) und 350 g eines aliphatischen Epoxidharzes mit einem Epoxyäquivalentgewicht von 310-340 werden mit 144 g Acrylsäure in 70 %iger Lösung in Äthylglykolacetat bei 110 °C bis zu einer Säurezahl von unter 3 mg KOH/g umgesetzt.

C3) 1 100 g eines Epoxidharzes auf Basis Bisphenol A (ÄG = 480-550), 400 g eines Epoxidharzes auf Basis Bisphenol A (ÄG = 200) und 344 Methacrylsäure werden in 461 g Methylisobutylketon wie unter C1) beschrieben umgesetzt.

C4) 500 g eines Polybutadien-MSA-Adduktes (Maleinsäureanhydrid-Äquivalentgewicht = 500) und 130 g Hydroxyäthylmethacrylat werden bei 115 °C bis zur theoretischen Säurezahl des Halbesters umgesetzt. Anschließend werden 142 g Glycidylmethacrylat zugesetzt und bis zu einer Säurezahl von unter 5 mg KOH/g verestert.

C5) Es wird ein Copolymerisat hergestellt aus 300 g Styrol, 144 g Acrylsäure, 116 g Hydroxyäthylacrylat und 130 g Hydroxyäthylmethacrylat. Nach dem Entfernen des Polymerisationskatalysators werden 284 g Glycidylmethacrylat hinzugefügt und bei 110 °C bis zu einer Säurezahl von weniger als 5 mg KOH/g verestert.

C6) Aus 100 g Adipinsäure, 16 g Diäthylenglykol, 59 g Trimethylolpropan und 63 g Neopentylglykol wird durch azeotropes Entfernen des Reaktionswassers ein gesättigter Pokyester mit freien Hydroxylgruppen hergestellt. 120 g eines Reaktionsproduktes von äquimolaren Mengen Toluylendiisocyanat und Hydroxyäthylmethacrylat werden hinzugefügt und bei 60 °C gehalten, bis der NCO-Wert unter 0,1 % ist.

C7) Aus 100 g Adipinsäure, 98 g Maleinsäureanhydrid, 18 g Hexandiol und 40 g Trimethylolpropan wird ein carboxylgruppenhältiger ungesättigter Polyester hergestellt. Nach Zugabe von 120 g Glycidylmethacrylat wird verestert, bis die Säurezahl unter 5 mg KOH/g sinkt.

C8) 700 g eines Epoxynovolaks, enthaltend etwa 3,6 Mol Epoxidgruppen, werden mit 252 g Acrylsäure in 408 g AEGLAC bei 100 °C umgesetzt, bis die Säurezahl unter 3 mg KOH/g gesunken ist.

D) Herstellung der erfindungsgemäßen Bindemittel

Beispiele 1-16 : Durch Umsetzung der hydroxylgruppenhaltigen Harze (Komponente C) mit den Isocyanataddukten (Komponente B) in den in Tabelle 3 angegebenen Mengenverhältnissen (die Angaben

beziehen sich auf Festharz) werden Bindemittel hergestellt, deren Prüfung und Eigenschaften in KETL-Überzugsmitteln in Tabelle 4 zusammengefaßt sind.

Die Umsetzung erfolgt in 70 %iger Lösung in AEGLAC bei 60-70 °C, bis zu einem NCO-Wert von unter 0,1 %. Die Harze werden anschließend mit Monoäthylenglykolmonoäthyläther auf einen Festkörpergehalt von 60 Gew.-% verdünnt.

TABELLE 3

| Beispiel | Komponente B | | Komponente C | | DBZ | Aminzahl |
|---|---|---|---|---|---|---|
| 1 | 754 | 1 | 558 | 1 | 1,5 | 85,4 |
| 2 | 698 | 4 | 694 | 2 | 1,4 | 80,5 |
| 3 | 603 | 11 | 694 | 2 | 1,5 | 77,7 |
| 4 | 1 367 | 9 | 1 844 | 3 | 1,3 | 52,3 |
| 5 | 393 | 5 | 772 | 4 | 0,9 | 48,0 |
| 6 | 1 128 | 13 | 974 | 5 | 1,0 | 79,9 |
| 7 | 264 | 2 | 1 120 | 6 | 0,3 | 32,4 |
| 8 | 1 000 | 8 | 1 844 | 3 | 1,4 | 49,2 |
| 9 | 589 | 5 | 558 | 1 | 1,7 | 73,2 |
| 10 | 358 | 3 | 694 | 2 | 1,9 | 53,2 |
| 11 | 794 | 10 | 974 | 5 | 1,1 | 63,3 |
| 12 | 460 | 6 | 1 120 | 7 | 0,5 | 42,5 |
| 13 | 394 | 7 | 772 | 4 | 0,9 | 48,0 |
| 14 | 915 | 12 | 694 | 2 | 1,2 | 69,6 |
| 15 | 377 | 1 | 694 | 2 | 1,9 | 52,3 |
| 16 | 716 | 3 | 952 | 8 | 2,2 | 67,2 |

DBZ : Doppelbindungszahl = Anzahl der polymerisierbaren Doppelbindungen pro 1 000 Molekulargewichtseinheiten.

Die Prüfung der Bindemittel erfolgt durch Bestimmung der Härte und Wasserbeständigkeit anhand einer 30 Minuten bei 160 °C eingebrannten Klarlackbeschichtung auf einem entfetteten, nicht vorbehandelten Stahlblech. Die Ergebnisse sind in Tabelle 4 zusammengefaßt.

Für den Salzsprühtest werden die entfetteten, nicht vorbehandelten Stahlbleche mit einem pigmentierten Lack (100 Teile Festharz, 16 Teile Al-Silikatpigment, 2 Teile Ruß, 2 Teile Bleisilikat) unter Bedingungen, welche eine Trockenfilmstärke von 16-20 µm ergeben, beschichtet und 30 Minuten bei 160 °C eingebrannt. Bei der Prüfung gemäß ASTM-B 117-64 zeigen alle Beschichtungen auch nach einer Belastungszeit von 340 Stunden einen Angriff am Kreuzschnitt von weniger als 2 mm (Abreißmethode).

TABELLE 4

| | Neutralisation | | Beschichtung | | | Wasser- |
|---|---|---|---|---|---|---|
| Beispiel | Menge (1) | Art (2) | Aufbruchs-spannung | Abscheide-spannung | Härte (3) | beständigkeit (4) |
| 1 | 45 mMol | AS | 300 V | 200 V | 200 s | 400 |
| 2 | 45 mMol | AS | 280 V | 200 V | 200 s | 400 |
| 3 | 45 mMol | ES | 300 V | 200 V | 190 s | 400 |
| 4 | 40 mMol | AS | 300 V | 200 V | 160 s | 400 |
| 5 | 45 mMol | ES | 250 V | 180 V | 160 s | 400 |
| 6 | 45 mMol | AS | 270 V | 200 V | 160 s | 380 |
| 7 | 35 mMol | ES | 300 V | 200 V | 140 s | 370 |
| 8 | 40 mMol | AS | 300 V | 200 V | 180 s | 400 |
| 9 | 45 mMol | AS | 300 V | 200 V | 190 s | 400 |
| 10 | 40 mMol | AS | 300 V | 200 V | 170 s | 380 |
| 11 | 45 mMol | AS | 280 V | 200 V | 170 s | 370 |
| 12 | 45 mMol | ES | 270 V | 200 V | 160 s | 360 |
| 13 | 40 mMol | AS | 280 V | 200 V | 160 s | 380 |
| 14 | 45 mMol | AS | 300 V | 200 V | 180 s | 400 |
| 15 | 40 mMol | AS | 270 V | 200 V | 180 s | 400 |
| 16 | 45 mMol | AS | 260 V | 200 V | 190 s | 400 |

(1) mMol Säure pro 100 g Festharz.
(2) AS : Ameisensäure, ES : Essigsäure.
(3) Pendelhärte nach König : DIN 53 157 (Sekunden).
(4) Angabe der Stunden bis Rost- oder Blasenbildung bei Wasserlagerung (40 °C) sichtbar.

**Ansprüche**

1. Verfahren zur Herstellung von nach vollständiger oder partieller Neutralisation mit anorganischen und/oder organischen Säuren wasserverdünnbaren Bindemitteln, welche insbesondere in kathodisch abscheidbaren Überzugsmitteln eingesetzt werden können, auf der Basis von harzartigen, Urethanbindungen sowie Aminogruppen enthaltenden Polykondensations-, Polymerisations- oder Polyadditionsverbindungen, dadurch gekennzeichnet, daß man zur Herstellung dieser Verbindungen

(A) 1 Mol eines Dialkanolamins mit 0,8 bis 1,3, vorzugsweise 1,0 bis 1,2 Mol eines Aldehyds oder eines Ketons mit bis zu 6 C-Atomen pro Alkylrest in bekannter Weise bei Temperaturen bis maximal 130 °C zu einem N-Hydroxyalkyloxazolidin umsetzt,

(B) das N-Hydroxyalkyloxazolidin mit 1 Mol eines aromatischen und/oder cycloaliphatischen und/oder aliphatischen Diisocyanats bei maximal 30 °C bis zu einem dem Monoaddukt entsprechenden NCO-Wert reagiert und

(C) das Monoaddukt bei 20-120 °C über seine freie Isocyanatgruppe mit den Hydroxylgruppen eines Polykondensations-, Polymerisations- oder Polyadditionsharzes verknüpft, wobei die Komponente (B) in einer Menge eingesetzt wird, daß das Endprodukt eine Aminzahl zwischen 30 und 100 mg KOH/g aufweist.

2. Verfahren nach Anspruch 1, dadurch gekennzeichnet, daß als N-Hydroxyalkyloxazolidin ein aus Diäthanolamin oder Diisopropanolamin und Formaldehyd hergestelltes Reaktionsprodukt eingesetzt wird.

3. Verfahren nach den Ansprüchen 1 und 2, dadurch gekennzeichnet, daß man das N-Hydroxyalkyloxazolidin vor der Umsetzung mit dem Diisocyanat entsprechend der Menge an freiem Amin mit 0,1 bis 0,3 Mol eines Alkylacrylats bei 40 bis 100 °C während 1/2 bis 5 Stunden reagiert.

4. Verfahren nach den Ansprüchen 1 bis 3, dadurch gekennzeichnet, daß man die Reaktion in Stufe (B) in Gegenwart eines isocyanatinerten Lösungsmittels und/oder durch langsame Zugabe des N-Hydroxyalkyloxazolidine zum Diisocyanat während 1 Stunde, vorzugsweise während 30 Minuten durchführt.

5. Verfahren nach den Ansprüchen 1 bis 4, dadurch gekennzeichnet, daß man in der Stufe (C) ein Mischaddukt, verwendet, in dem pro Mol Diisocyanat 5-40 Mol-% des N-Hydroxyalkyloxazolidins durch ein Hydroxyalkyl(meth)acrylat ersetzt ist.

6. Verfahren nach Anspruch 5, dadurch gekennzeichnet, daß man das Hydroxyalkyl(meth)acrylat gleichzeitig mit dem Oxazolidin oder anschließend an die Zugabe des Oxazolidins mit dem Diisocyanat zur Reaktion bringt.

7. Verfahren nach den Ansprüchen 1 bis 6, dadurch gekennzeichnet, daß durch die in Stufe (C) eingesetzten harzartigen Verbindungen und/oder durch Einsatz von Mischaddukten Bindemittel resultieren, welche eine Doppelbindungszahl zwischen 0,1 und 2,5 aufweisen.

**Claims**

1. Process for producing binders water dilutable upon total or partial neutralisation with inorganic and/or organic acids, particularly for use in cathodically depositable coating compositions, on the basis of polycondensation, polymerisation and polyaddition compounds containing resin-like urethane compounds and amine groups, characterised in that in the preparation of these compounds

(A) 1 mole of a dialkanol amine and from 0.8 to 1.3, preferably from 1.0 to 1.2 moles of an aldehyde or a ketone with up to 6 C-Atoms per alkyl radical are reacted in known manner at temperatures of up to 130 °C as a maximum to form an N-hydroxyalkyl oxazolidine,

(B) the N-hydroxyalkyloxazolidine is reacted at a maximum of 30 °C with 1 mole of an aromatic and/or cycloaliphatic and/or aliphatic diisocyanate to an NCO-value corresponding to a monoadduct,

(C) the monoadduct is linked at from 20 to 120 °C through its free isocyanate group with the hydroxy groups of the polycondensation, polymerisation or polyaddition resin, component (B) being used in such a quantity that the final product has an amine value of between 30 and 100 mg KOH/g.

2. Process according to claim 1, characterised in that the N-hydroxyalkyloxazolidine is a reaction product of diethanolamine or diisopropanolamine and formaldehyde.

3. Process according to claims 1 and 2, characterised in that prior to the reaction with the diisocyanate, the N-hydroxyalkyloxazolidine is reacted according to its content of free amine, with from 0.1 to 0.3 moles of an alkylacrylate, at from 40 to 100 °C during from 30 minutes to 5 hours.

4. Process according to claims 1 to 3, characterised in that reaction step (B) is carried out in the presence of an isocyanate inert solvent and/or through slow addition of the N-hydroxyalkyloxazolidine to the diisocyanate during 1 hour, preferably during 30 minutes.

5. Process according to claims 1 to 4, characterised in that for reaction step (C) a mixed adduct is used in which per mole of diisocyanate of from 5 to 40 mole-% of the hydroxyalkyloxazolidine are replaced by a hydroxyalkyl(meth)acrylate.

6. Process according to claims 1 to 5, characterised in that the hydroxyalkyl(meth)acrylate is reacted with the diisocyanate simultaneously with the oxazolidine or subsequently to the addition of the oxazolidine.

7. Process according to claims 1 to 6, characterised in that through the use of resin-like compounds or mixed adducts in step (C) binders result which have a double bond number of between 0.1 and 2.5.

**Revendications**

1. Procédé pour la préparation de liants diluables par l'eau après neutralisation totale ou partielle par des acides minéraux et/ou organiques, liants pouvant être utilisés en particulier pour des agents de revêtement déposables à la cathode, à base de composés résineux de polycondensation, de polymérisation ou de polyaddition contenant des liaisons uréthannes ainsi que des groupes aminés, caractérisé en ce que pour la préparation de ces composés :

(A) on fait réagir 1 mole d'une dialcanolamine avec 0,8 à 1,3, de préférence 1,0 à 1,2 mole d'un aldéhyde ou d'une cétone avec jusqu'à 6 atomes de carbone par reste alkyle, de façon connue, à des températures allant jusqu'à 130 °C au maximum en une N-hydroxyalkyloxazolidine,

(B) on fait réagir la N-hydroxyalkyloxazolidine avec 1 mole d'un diisocyanate aromatique et/ou cycloaliphatique et/ou aliphatique à 30 °C au maximum jusqu'à une valeur de NCO correspondant au composé de monoaddition et

(C) on réticule le composé de monoaddition à 20-120 °C à l'aide de son groupe isocyanate libre avec les groupes hydroxyles d'une résine de polycondensation, de polymérisation ou de polyaddition, le composant (B) étant introduit en une quantité telle que le produit final présente un indice d'amine entre 30 et 100 mg KOH/g.

2. Procédé selon la revendication 1, caractérisé en ce que l'on introduit comme N-hydroxyalkyloxazolidine un produit de réaction préparé à partir de la diéthanolamine ou de la diisopropanolamine et du formaldéhyde.

3. Procédé selon les revendications 1 et 2, caractérisé en ce que l'on fait réagir la N-hydroxyalkyloxazolidine avant la réaction avec le diisocyanate selon la quantité en amine libre avec 0,1 à 0,3 mole d'un acrylate d'alkyle à 40 à 100 °C pendant 1/2 à 5 heures.

4. Procédé selon les revendications 1 à 3, caractérisé en ce que l'on effectue la réaction dans le stade (B) en présence d'un solvant inerte envers les isocyanates et/ou par addition lente de la N-hydroxyalkyloxazolidine au diisocyanate pendant 1 heure, de préférence pendant 30 minutes.

5. Procédé selon les revendications 1 à 4, caractérisé en ce que l'on utilise dans le stade (C) un composé d'addition mélangé dans lequel 5-40 moles% de l'hydroxyalkyloxazolidine sont remplacées par un (méth)acrylate d'hydroxyalkyle par mole de diisocyanate.

6. Procédé selon la revendication 5, caractérisé en ce que l'on amène à réagir le (méth)acrylate d'hydroxyalkyle en même temps avec l'oxazolidine ou immédiatement après l'addition de l'oxazolidine avec le diisocyanate.

7. Procédé selon les revendications 1 à 6, caractérisé en ce que l'introduction de composés du type résine dans le stade (C) et/ou celle des composés d'addition mélangés conduit à des liants qui présentent un indice de double liaison entre 0,1 et 2,5.